# EUROPEAN PATENT APPLICATION

(11) **EP 4 357 917 A1**
(43) Date of publication of application: **24.04.2024**
(21) Application number: 22840991.8
(22) Date of filing: 18.04.2022
(51) Int. Cl.: G06F 9/48

(54) **TASK EXECUTION METHOD AND APPARATUS**

(30) Priority: 16.07.2021 CN 202110807311; 15.09.2021 CN 202111080322
(71) Applicant: Huawei Cloud Computing Technologies Co., Ltd., Guizhou 550025 (CN)
(72) Inventor: LING, Neiwen, Hong Kong Shatin, New Territories Hong Kong 999077 (CN); WANG, Kai, Hong Kong Shatin, New Territories Hong Kong 999077 (CN); XIE, Daqi, Guizhou 550025 (CN)
(74) Representative: Pfenning, Meinig & Partner mbB
(86) International application number: PCT/CN2022/087411
(87) International publication number: WO 2023/284347

(57) **Abstract**

This application discloses a task execution method and apparatus, and belongs to the field of resource scheduling technologies. The method includes: determining a plurality of deep learning tasks to be concurrently executed and an artificial intelligence model for implementing each deep learning task; obtaining an execution policy of each deep learning task, where the execution policy indicates a scheduling mode and a used model variant of the deep learning task, and the model variant of the deep learning task is obtained according to the artificial intelligence model for implementing the deep learning task; and executing a corresponding deep learning task according to the execution policy of each deep learning task. In this application, execution performance of a deep learning task can be improved in terms of a scheduling mode of the deep learning task, and can also be improved in terms of a model for implementing the deep learning task, to effectively improve the execution performance of the deep learning task.

## Description

This application claims priorities to Chinese Patent Application No. 202110807311.9, filed on July 16, 2021 and entitled "MACHINE LEARNING METHOD AND APPARATUS", and to Chinese Patent Application No. 202111080322.8, filed on September 15, 2021 and entitled "TASK EXECUTION METHOD AND APPARATUS", both of which are incorporated herein by reference in their entireties.

### TECHNICAL FIELD

This application relates to the field of resource scheduling technologies, and in particular, to a task execution method and apparatus.

### BACKGROUND

In recent years, increasingly more deep learning tasks (deep learning task, DL Task) are implemented using deep neural network (deep neural network, DNN) models. However, in an artificial intelligence system for implementing a deep learning task, a plurality of concurrent deep learning tasks inevitably need to be executed. In this way, under a limited resource condition of the artificial intelligence system, a problem of resource contention between a plurality of deep learning tasks is an urgent problem to be resolved currently.

In a conventional technology, a deep neural network model for implementing each deep learning task may be compressed, and then the deep learning task is executed by using the compressed model, to reduce resources used by the deep learning task by reducing a computing requirement of the deep neural network model, thereby alleviating resource contention between the plurality of deep learning tasks.

However, precision of the compressed deep neural network model is reduced, and an implementation effect of the deep learning task is affected.

### SUMMARY

This application provides a task execution method and apparatus. In this application, execution performance of a deep learning task can be improved in terms of a scheduling mode of the deep learning task, and can also be improved in terms of a model for implementing the deep learning task, to effectively improve the execution performance of the deep learning task. The technical solutions provided in this application are as follows:

According to a first aspect, this application provides a task execution method. The method includes: determining a plurality of deep learning tasks to be concurrently executed and an artificial intelligence model for implementing each deep learning task; obtaining an execution policy of each deep learning task, where the execution policy indicates a scheduling mode and a used model variant of the deep learning task, and the model variant of the deep learning task is obtained according to the artificial intelligence model for implementing the deep learning task; and executing a corresponding deep learning task according to the execution policy of each deep learning task.

In the task execution method provided in this application, because the execution policy of the deep learning task indicates the scheduling mode and the used model variant of the deep learning task, the scheduling mode of the deep learning task and the model for implementing the deep learning task are combined, so that execution performance of the deep learning task can be improved in terms of the scheduling mode of the deep learning task, and can also be improved in terms of the model for implementing the deep learning task. This effectively improves execution performance of the deep learning task. In this way, the plurality of deep learning tasks to be concurrently executed can be better executed under a limited resource condition, so that resources can be more effectively used, real-time performance of the deep learning task can be ensured, and accuracy performance of the deep learning task can be ensured, to better ensure user experience.

Because the execution policy indicates the scheduling mode and the used model variant of the deep learning task, the executing a corresponding deep learning task according to the execution policy of each deep learning task may include: executing, by using a model variant indicated by an execution policy of any deep learning task, the deep learning task in a scheduling mode indicated by the execution policy of the deep learning task.

In an implementation, the scheduling mode indicates an execution priority of the deep learning task. Because resources of a system for implementing the deep learning task are limited, the plurality of deep learning tasks to be concurrently executed may be sequentially executed based on different execution priorities, to ensure implementation performance of the plurality of deep learning tasks.

Further, the scheduling mode further indicates to execute the deep learning task concurrently with another deep learning task. The another deep learning task may be a deep learning task in the plurality of deep learning tasks to be concurrently executed. By concurrently executing the deep learning tasks, resource utilization can be improved while the deep learning tasks are met. For example, when the deep learning task is implemented by using a hardware resource such as a model acceleration chip, utilization of the hardware resource such as the model acceleration chip can be improved.

Optionally, the another deep learning task is determined based on resource occupancy of the deep learning task and the another deep learning task. For example, in a process of obtaining execution policies of a plurality of deep learning tasks, resource occupation of the plurality of deep learning tasks may be separately obtained, and then deep learning tasks that can be concurrently executed are determined based on the resource occupation of the plurality of deep learning tasks and a principle of maximizing resource utilization. The resource occupancy of the deep learning task may be obtained by measuring resource utilization of the deep learning task that is executed in advance.

Optionally, the deep learning task may include a plurality of subtasks. When the corresponding deep learning task is executed according to the execution policy of each deep learning task, the corresponding deep learning task may be further executed for the subtasks included in the deep learning task. In an implementation, the executing a corresponding deep learning task according to the execution policy of each deep learning task includes: dividing each deep learning task into a plurality of subtasks; determining a priority of each subtask in each deep learning task among subtasks of a same type included in the plurality of deep learning tasks; and executing the deep learning task based on the execution policy of each deep learning task and the priority of the subtask.

When the deep learning task is separately executed for the plurality of subtasks included in the deep learning task, the deep learning task can be executed based on the priority of the subtask and the execution policy of the deep learning task, so that a scheduling policy of the deep learning task is more refined, and execution performance of the deep learning task is further improved.

In an implementation, the execution policy of the deep learning task may be selected from a plurality of candidate execution policies. For example, the obtaining an execution policy of each deep learning task includes: for any deep learning task, obtaining a plurality of candidate execution policies of the deep learning task, where at least scheduling modes or model variants indicated by any two candidate execution policies are different; obtaining performance data for executing the deep learning task according to each candidate execution policy; and selecting the execution policy of the deep learning task from the plurality of candidate execution policies based on the performance data of the plurality of candidate execution policies.

The performance data includes real-time data, the real-time data indicates real-time performance of the deep learning task, and the real-time performance means whether the deep learning task can be completed within a specified time limit. The real-time data is obtained through prediction according to a pretrained artificial intelligence model.

The performance data further includes accuracy data, the accuracy data indicates accuracy of the deep learning task, and the accuracy is a probability of accurately implementing the deep learning task. The accuracy data is obtained based on precision of a model variant indicated by the candidate execution policy. In addition, when accuracy data for executing the deep learning task by using any candidate execution policy is obtained, overall performance of the plurality of deep learning tasks may be considered. For example, a sum of normalized accuracy losses of all deep learning tasks is considered, to achieve overall optimal performance.

Optionally, the performance data for executing the deep learning task according to any candidate execution policy may be measured by executing the deep learning task according to the candidate execution policy. However, if the performance of each candidate execution policy is measured by actual execution, costs for obtaining performance data increase exponentially with a quantity of tasks and a quantity of model variants. Therefore, in this application, the real-time data may be predicted according to the pretrained artificial intelligence model (referred to as a prediction model below), and the accuracy data may be obtained based on the precision of the model variant indicated by the candidate execution policy. The prediction model may be trained by using actually measured historical performance data, and real-time data of each candidate execution policy may be predicted by using the trained prediction model.

The real-time data is predicted. Obtaining the real-time data can be greatly speeded up, to speed up obtaining the execution policy of the deep learning task. In addition, because the prediction model is trained by using actually measured historical performance data, a prediction effect is closer to actual performance than that of real-time data obtained by using a technology such as schedulable analysis at a current stage. This helps find a more effective execution policy, to better ensure user experience.

Optionally, the model variant indicated by the execution policy of the deep learning task is obtained by compressing the artificial intelligence model for implementing the deep learning task. The artificial intelligence model is compressed, so that a calculation amount for implementing the deep learning task can be reduced by compressing a structure of the artificial intelligence model, to facilitate flexible scheduling of the deep learning task. Optionally, when the artificial intelligence model is compressed, a used compression technology may be determined based on a task feature of the deep learning task. For example, for a deep learning task of an image processing type, model compression may be performed by using a model compression technology such as pruning and quantization. For a deep learning task of a voice processing type, model compression may be performed by using a model compression technology such as knowledge distillation.

Further, after the artificial intelligence model is compressed, a weight parameter of the compressed artificial intelligence model may be further adjusted, to restore model precision of the model variant lost due to compression. The weight parameter of the artificial intelligence model may be adjusted with assistance of a knowledge distillation technology, to ensure performance of the artificial intelligence model whose weight parameter is adjusted.

According to a second aspect, this application provides a task execution apparatus. The apparatus includes: a determining module, configured to determine a plurality of deep learning tasks to be concurrently executed and an artificial intelligence model for implementing each deep learning task; an obtaining module, configured to obtain an execution policy of each deep learning task, where the execution policy indicates a scheduling mode and a used model variant of the deep learning task, and the model variant of the deep learning task is obtained according to the artificial intelligence model for implementing the deep learning task; and an execution module, configured to execute a corresponding deep learning task according to the execution policy of each deep learning task.

Optionally, the execution module is specifically configured to execute, by using a model variant indicated by an execution policy of any deep learning task, the deep learning task in a scheduling mode indicated by the execution policy of the deep learning task.

Optionally, the scheduling mode indicates an execution priority of the deep learning task.

Optionally, the scheduling mode further indicates to execute the deep learning task concurrently with another deep learning task.

Optionally, the another deep learning task is determined based on resource occupancy of the deep learning task and the another deep learning task.

Optionally, the execution module is specifically configured to: divide each deep learning task into a plurality of subtasks; determine a priority of each subtask in each deep learning task among subtasks of a same type included in the plurality of deep learning tasks; and execute the deep learning task based on the execution policy of each deep learning task and the priority of the subtask.

Optionally, the obtaining module is specifically configured to: for any deep learning task, obtain a plurality of candidate execution policies of the deep learning task, where at least scheduling modes or model variants indicated by any two candidate execution policies are different; obtain performance data for executing the deep learning task according to each candidate execution policy; and select the execution policy of the deep learning task from the plurality of candidate execution policies based on the performance data of the plurality of candidate execution policies.

Optionally, the performance data includes real-time data, and the real-time data is obtained through prediction according to a pretrained artificial intelligence model.

Optionally, the performance data includes accuracy data, and the accuracy data is obtained based on precision of a model variant indicated by the candidate execution policy.

Optionally, the model variant indicated by the execution policy of the deep learning task is obtained by compressing the artificial intelligence model for implementing the deep learning task.

Optionally, the model variant indicated by the execution policy of the deep learning task is obtained by compressing the artificial intelligence model for implementing the deep learning task and by adjusting a weight parameter of the compressed artificial intelligence model.

According to a third aspect, this application provides a computer device, including a memory and a processor. The memory stores program instructions, and the processor runs the program instructions to perform the method provided in any one of the first aspect and the possible implementations of the first aspect of this application.

According to a fourth aspect, this application provides a computer-readable storage medium. The computer-readable storage medium is a non-volatile computer-readable storage medium. The computer-readable storage medium includes program instructions, and when the program instructions are run on a computer device, the computer device is enabled to perform the method provided in any one of the first aspect and the possible implementations of the first aspect of this application.

According to a fifth aspect, this application provides a computer program product including instructions. When the computer program product runs on a computer, the computer is enabled to perform the method provided in any one of the first aspect and the possible implementations of the first aspect of this application.

### BRIEF DESCRIPTION OF DRAWINGS

FIG. 1 is a schematic diagram of an application scenario in a task execution method according to an embodiment of this application;
FIG. 2 is a schematic diagram of deployment of a computer device in an application scenario in a task execution method according to an embodiment of this application;
FIG. 3 is a schematic diagram of an application scenario in another task execution method according to an embodiment of this application;
FIG. 4 is a flowchart of a task execution method according to an embodiment of this application;
FIG. 5 is a flowchart of a method for obtaining an execution policy of a deep learning task according to an embodiment of this application;
FIG. 6 is a schematic diagram of a principle of obtaining an execution policy of a deep learning task by cooperation of a first computer device, a second computer device, and a third computer device according to an embodiment of this application;
FIG. 7 is a schematic diagram of a principle of obtaining an execution policy by a second computer device according to an embodiment of this application;
FIG. 8 is a flowchart of a method for executing a deep learning task based on a subtask according to an embodiment of this application;
FIG. 9 is a schematic diagram of a principle of executing a deep learning task by a third computer device according to an embodiment of this application;
FIG. 10 is a schematic diagram of a structure of a task execution apparatus according to an embodiment of this application; and
FIG. 11 is a schematic diagram of a structure of a computer device according to an embodiment of this application.

### DESCRIPTION OF EMBODIMENTS

To make the objectives, technical solutions, and advantages of this application clearer, the following further describes the implementations of this application in detail with reference to the accompanying drawings.

Embodiments of this application provide a task execution method. In the task execution method, a plurality of deep learning tasks to be concurrently executed and an artificial intelligence model for implementing each deep learning task need to be first determined, then an execution policy of each deep learning task is obtained, and then a corresponding deep learning task is executed according to the execution policy of each deep learning task.

Because the execution policy of the deep learning task indicates a scheduling mode and a used model variant of the deep learning task, the scheduling mode of the deep learning task and the model for implementing the deep learning task are combined, so that execution performance of the deep learning task can be improved in terms of the scheduling mode of the deep learning task, and can also be improved in terms of the model for implementing the deep learning task. This effectively improves execution performance of the deep learning task. In this way, the plurality of deep learning tasks to be concurrently executed can be better executed under a limited resource condition, so that resources can be more effectively used, real-time performance of the deep learning task can be ensured, and accuracy performance of the deep learning task can be ensured, to better ensure user experience.

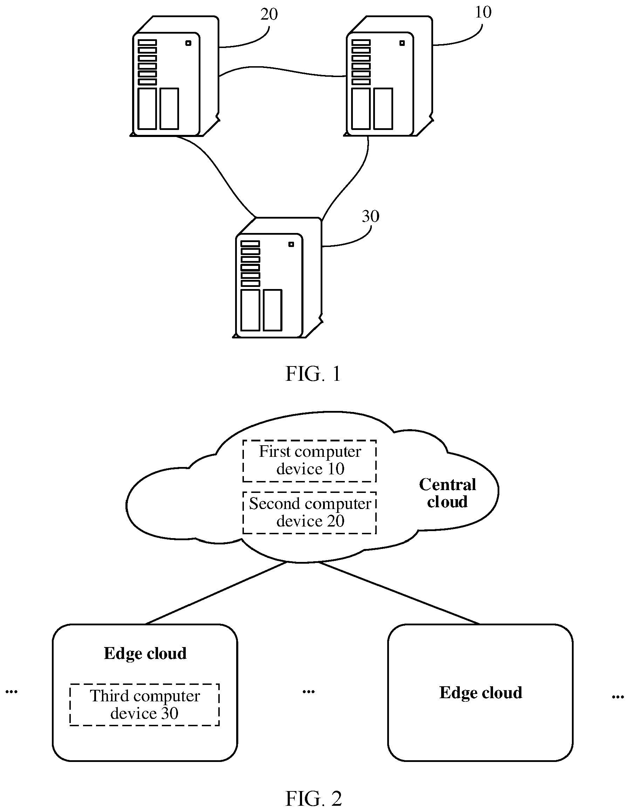

FIG. 1 is a schematic diagram of an application scenario in a task execution method according to an embodiment of this application. As shown in FIG. 1, the application scenario includes a first computer device 10, a second computer device 20, and a third computer device 30. The third computer device 30 is connected to both the first computer device 10 and the second computer device 20 through a communication channel. One or more of the first computer device 10, the second computer device 20, and the third computer device 30 may be an independent computer device, or may be a computer cluster including a plurality of computers. Optionally, all the third computer device 30, the first computer device 10, and the second computer device 20 may be implemented by using a graphics card, an Al computing chip, a physical machine, a bare metal server, a cloud server, or the like.

The first computer device 10 is configured to: determine a plurality of deep learning tasks to be concurrently executed and an artificial intelligence model for implementing each deep learning task, obtain a plurality of model variants of each artificial intelligence model, and provide the second computer device 20 with the plurality of model variants of the artificial intelligence model for implementing each deep learning task or information about the plurality of model variants. Information about a model variant may be an identifier, accuracy, and the like of the model variant. The model variant of the artificial intelligence model is obtained according to the artificial intelligence model. For example, the model variant of the artificial intelligence model may be obtained by performing model compression on the artificial intelligence model. Alternatively, the model variant of the artificial intelligence model may be obtained by performing model compression on the artificial intelligence model and adjusting a weight parameter of the artificial intelligence model on which model compression is performed.

The second computer device 20 is configured to: determine an execution policy of each deep learning task based on a performance requirement of each deep learning task and the plurality of model variants of the artificial intelligence model for implementing each deep learning task or the information about the plurality of model variants, and provide the execution policy of each deep learning task for the third computer device 30. The execution policy of any deep learning task indicates a scheduling mode and a used model variant of the deep learning task.

The third computer device 30 is configured to execute a corresponding deep learning task according to the execution policy of the deep learning task provided by the second computer device 20.

It should be noted that the implementation scenario including the first computer device 10, the second computer device 20, and the third computer device 30 is only an implementation form of the implementation scenario. When the task execution method is implemented, an implementation form of the implementation scenario may be adjusted according to a requirement. For example, functions of the first computer device 10, the second computer device 20, and the third computer device 30 may be implemented by using a same computer device, or the implementation scenario may further include more computer devices. Some functions of one or more of the first computer device 10, the second computer device 20, and the third computer device 30 may be implemented by one or more of the more computer devices. This is not specifically limited in embodiments of this application.

The following uses the application scenario shown in FIG. 1 as an example to describe a deployment manner. A deployment manner of the first computer device 10, the second computer device 20, and the third computer device 30 is flexible. The first computer device 10, the second computer device 20, and the third computer device 30 may be deployed in a distributed manner, or deployed in a centralized manner. For example, when the first computer device 10, the second computer device 20, and the third computer device 30 are all graphics cards or Al computing chips, the first computer device 10, the second computer device 20, and the third computer device 30 may be deployed on different hosts in a distributed manner, or deployed on a same host in a centralized manner. Alternatively, any two of the first computer device 10, the second computer device 20, and the third computer device 30 may be deployed in a centralized manner, and the other one of the first computer device 10, the second computer device 20, and the third computer device 30 is deployed in a distributed manner relative to the two.

In addition, when the first computer device 10, the second computer device 20, and the third computer device 30 are deployed in a distributed manner, the first computer device 10, the second computer device 20, and the third computer device 30 may be deployed in a same resource environment in a distributed manner, or may be deployed in different resource environments in a distributed manner. For example, a large quantity of basic resources owned by a cloud service provider, such as computing resources, storage resources, and network resources, are deployed on a central cloud platform, and the computing resources may be a large quantity of computing devices (for example, servers). In this case, the first computer device 10, the second computer device 20, and the third computer device 30 may be implemented by using the basic resources deployed on the central cloud platform. That is, the first computer device 10, the second computer device 20, and the third computer device 30 may be all deployed on the central cloud platform. For another example, if the basic resources owned by the cloud service provider are also deployed on an edge cloud platform, the first computer device 10, the second computer device 20, and the third computer device 30 may all be deployed on the edge cloud platform. Alternatively, some of the first computer device 10, the second computer device 20, and the third computer device 30 may be deployed on the central cloud platform, and some thereof are deployed on the edge cloud platform. For example, as shown in FIG. 2, the first computer device 10 and the second computer device 20 are deployed on the central cloud platform, and the third computer device 30 is deployed on the edge cloud platform. When at least some of the first computer device 10, the second computer device 20, and the third computer device 30 are deployed on the edge cloud platform, because the edge cloud platform is close to a user, problems of data privacy and a network transmission delay can be effectively alleviated.

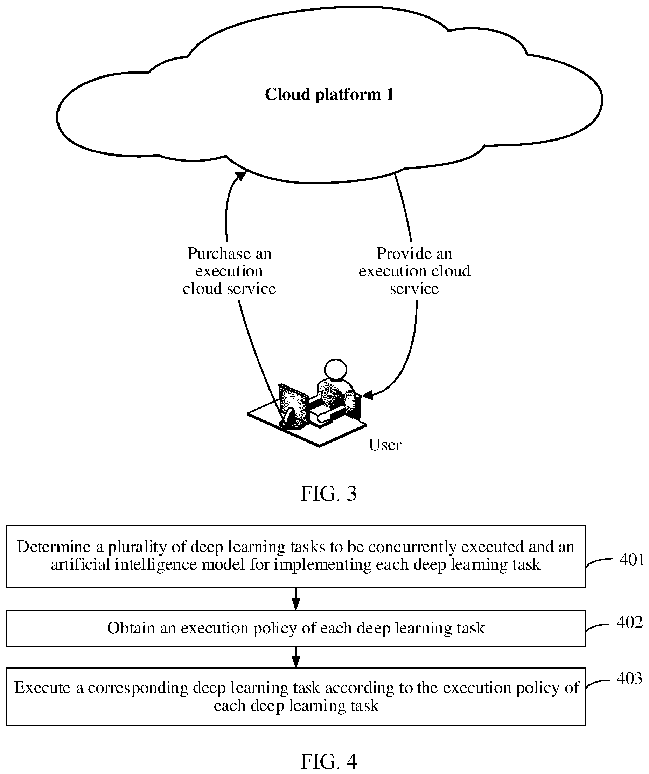

In addition, when the first computer device 10, the second computer device 20, and the third computer device 30 are deployed on a cloud platform, as shown in FIG. 3, the task execution method provided in embodiments of this application can be abstracted by the cloud service provider on a cloud platform 1 as an execution cloud service and provided for a user. After the user purchases the execution cloud service on the cloud platform 1, the cloud platform 1 can provide the execution cloud service for the user by using the first computer device 10, the second computer device 20, and the third computer device 30 that are deployed on the cloud platform 1. A manner of purchasing the execution cloud service may include: pre-recharging and then performing settlement based on final actual usage of resources, or performing settlement based on time in which the execution cloud service is provided.

In an implementation, the execution cloud service may be an independent cloud service in cloud services provided by the cloud platform. That is, the user can independently purchase the execution cloud service on the cloud platform. In this case, the user may request the cloud platform to execute a deep learning task. The cloud platform executes, based on the plurality of deep learning tasks that are to be concurrently executed and that are received by the cloud platform, the task execution method provided in embodiments of this application, to provide the user with the execution cloud service for executing the deep learning task. When the execution cloud service is an independent cloud service, dependency of the execution cloud service on a business can be reduced, and flexibility of purchasing and using the execution cloud service can be improved.

In another implementation, a function of the execution cloud service may be provided as an additional function of another service. For example, some functions of another service need to be implemented by using a deep learning task. In this case, the some functions may be implemented by using the execution cloud service. In addition, the execution cloud service may be an optional function of the another service. When purchasing the provided another service, the user may choose, according to a service requirement of the user, whether to purchase the execution cloud service. When the user purchases the execution cloud service, in a process of providing the another service, resources of the cloud platform may be used to provide the execution cloud service for the user. The another service may also be a cloud service. This is not specifically limited in embodiments of this application.

It should be understood that the foregoing content is an example of an application scenario of the task execution method provided in embodiments of this application, and does not constitute a limitation on the application scenario of the event analysis method. A person of ordinary skill in the art may learn that, as a service requirement changes, the application scenario of the task execution method may be adjusted according to the application requirement. The application scenario is not listed in embodiments of this application.

The following describes an implementation process of the task execution method provided in embodiments of this application. As shown in FIG. 4, an implementation process of the task execution method may include the following steps.

Step 401: Determine a plurality of deep learning tasks to be concurrently executed and an artificial intelligence model for implementing each deep learning task.

A system (for example, an artificial intelligence system) for implementing a deep learning task usually needs to simultaneously execute a plurality of deep learning tasks. For example, in a cloud video live broadcast scenario, a cloud video processing edge platform needs to simultaneously execute a plurality of deep learning tasks such as facial recognition, image quality enhancement, beauty effect, and face change tasks. The plurality of deep learning tasks that need to be simultaneously executed are the plurality of deep learning tasks to be concurrently executed. A first computer device in the system can determine the plurality of deep learning tasks to be concurrently executed, and determine, based on the plurality of deep learning tasks, the artificial intelligence model for implementing each deep learning task. A deep learning task has a task attribute and a task requirement. The task attribute may indicate an artificial intelligence model used by the deep learning task, and the task requirement may indicate real-time performance and accuracy requirements of the deep learning task. For example, a real-time performance requirement of a deep learning task of facial recognition indicates that the deep learning task needs to be completed within 50 milliseconds (ms), and a task on-time completion rate is not less than 10%. A deep learning task of image quality enhancement needs to be completed within 100 ms, and a task on-time completion rate is not less than 15%. The deep learning task is a task that implements a specific function by executing a deep learning algorithm. The deep learning task in this embodiment of this application may be a real-time deep learning task. The real-time deep learning task is a deep learning task that has a real-time performance requirement. The artificial intelligence model for implementing the deep learning task may be a deep neural network. The deep neural network is a framework of deep learning, and is a neural network having at least one hidden layer.

Step 402: Obtain an execution policy of each deep learning task.

The execution policy indicates a scheduling mode and a used model variant of the deep learning task. The scheduling mode indicates how to schedule resources for implementing the deep learning task, to implement the deep learning task. In an implementation, the scheduling mode may indicate an execution priority of the deep learning task. Because resources of the system for implementing the deep learning task are limited, the plurality of deep learning tasks to be concurrently executed may be sequentially executed based on different execution priorities, to ensure implementation performance of the plurality of deep learning tasks.

Optionally, the scheduling mode may further indicate to execute the deep learning task concurrently with another deep learning task. The another deep learning task is determined based on resource occupancy of the deep learning task and the another deep learning task, and the another deep learning task may be a deep learning task in the plurality of deep learning tasks to be concurrently executed. In a process of obtaining execution policies of a plurality of deep learning tasks, resource occupation of the plurality of deep learning tasks may be separately obtained, and then deep learning tasks that can be concurrently executed are determined based on the resource occupation of the plurality of deep learning tasks and a principle of maximizing resource utilization. The resource occupancy of the deep learning task may be obtained by measuring resource utilization of the deep learning task that is executed in advance. In addition, an implementation of indicating to concurrently execute a plurality of deep learning tasks may include: assigning, to a same task flow, the plurality of deep learning tasks that need to be concurrently executed, so that a processor concurrently executes the plurality of deep learning tasks based on an indication of the task flow.

For example, it is assumed that resource utilization of a deep learning task 1 is 47%, resource utilization of a deep learning task 2 is 49%, resource utilization of a deep learning task 3 is 30%, and resource utilization of a deep learning task 4 is 67%. It can be learned from the foregoing that when the deep learning task 1 and the deep learning task 2 are concurrently executed, a sum of the resource utilization of the deep learning task 1 and the deep learning task 2 is approximately 96%, and it can be learned that when the deep learning task 3 and the deep learning task 4 are concurrently executed, a sum of the resource utilization of the deep learning task 3 and the deep learning task 4 is approximately 97%. When the deep learning tasks are concurrently executed in such a manner, not only resource utilization can be greatly improved, but also task execution performance is not affected due to resource contention. Therefore, the deep learning task 1 and the deep learning task 2 can be concurrently executed, and the deep learning task 3 and the deep learning task 4 can be concurrently executed.

By concurrently executing the deep learning tasks, resource utilization can be improved while the deep learning tasks are met. For example, when the deep learning task is implemented by using a hardware resource such as a model acceleration chip, utilization of the hardware resource such as the model acceleration chip can be improved.

The model variant of the deep learning task may be obtained according to the artificial intelligence model for implementing the deep learning task. In an implementation, the model variant indicated by the execution policy of the deep learning task may be obtained by compressing the artificial intelligence model for implementing the deep learning task. The artificial intelligence model is compressed, so that a calculation amount for implementing the deep learning task can be reduced by compressing a structure of the artificial intelligence model, to facilitate flexible scheduling of the deep learning task. Optionally, when the artificial intelligence model is compressed, a used compression technology may be determined based on a task feature of the deep learning task. For example, for a deep learning task of an image processing type, model compression may be performed by using a model compression technology such as pruning and quantization. For a deep learning task of a voice processing type, model compression may be performed by using a model compression technology such as knowledge distillation.

In addition, one deep learning task may have a plurality of model variants, and the model variant indicated by the execution policy is one of the plurality of model variants. The plurality of model variants may be different in size, precision, and delay, and can meet different task requirements. The plurality of model variants may be obtained by compressing the artificial intelligence model at different compression degrees. For example, for a visual geometric group network (visual geometry group network, VGG) model whose original size is 80 megabits (MB) and precision is 85.9%, compression operations with a plurality of compression degrees may be performed on the model by using a compression technology, to obtain three model variants whose model sizes are 71 MB, 60 MB, and 52 MB respectively and precision is 84.5%, 83.6%, and 82% respectively. Compression degrees of the plurality of model variants may be determined according to an application requirement. For example, the artificial intelligence model may be sequentially compressed level by level based on a default or specified degree difference, to obtain a plurality of model variants of the artificial intelligence model. Alternatively, the compression degree of the plurality of model variants may be adaptively determined according to a task requirement of the deep learning task.

In some scenarios, the deep learning task may have a plurality of levels of task requirements, and the deep learning task may have a plurality of model variants at different levels. For example, in a cloud video live broadcast scenario, a user may select one from a plurality of modes such as a standard definition mode, a high definition mode, and an ultra-high definition mode, to enjoy services with different qualities. For a deep learning task in the cloud video live broadcast scenario, a highest precision loss tolerance may be set for the deep learning task in each of the plurality of modes, and a plurality of model variants are generated separately without exceeding the highest precision loss tolerance in each mode, to ensure user experience.

Further, after the artificial intelligence model is compressed, a weight parameter of the compressed artificial intelligence model may be further adjusted, to restore model precision of the model variant lost due to compression. In other words, the model variant indicated by the execution policy of the learning task may be obtained by compressing the artificial intelligence model for implementing the deep learning task and by adjusting the weight parameter of the compressed artificial intelligence model. The weight parameter of the artificial intelligence model may be adjusted with assistance of a knowledge distillation technology, to ensure performance of the artificial intelligence model whose weight parameter is adjusted. In addition, in a process of obtaining a model variant, in addition to compression of the artificial intelligence model and adjustment of the weight parameter, some preprocessing may be performed on the artificial intelligence model, and a preprocessing manner may be determined according to an application requirement. This is not specifically limited in this embodiment of this application.

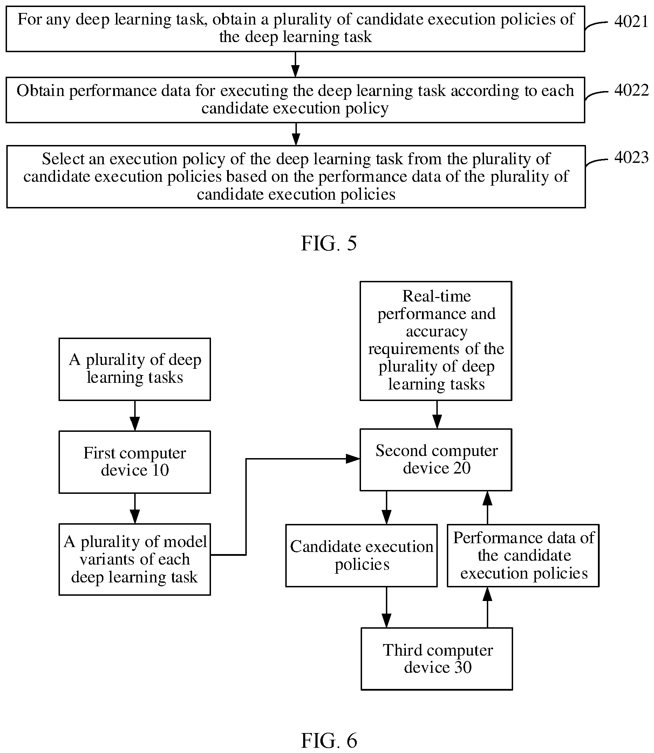

Optionally, the execution policy of each deep learning task may be selected from a plurality of candidate execution policies. In an implementation, as shown in FIG. 5, an implementation process of obtaining the execution policy of each deep learning task may include the following steps.

Step 4021: For any deep learning task, obtain a plurality of candidate execution policies of the deep learning task.

At least scheduling modes or model variants indicated by any two candidate execution policies are different. A scheduling mode may indicate an execution priority of a deep learning task. For any deep learning task, an execution priority of the deep learning task may be combined with different model variants of the deep learning task, to obtain a plurality of candidate policies of the deep learning task. In addition, the priority of the deep learning task may be an inherent attribute of the deep learning task. For example, the priority of the deep learning task may be equal to a priority of a user requesting to execute the deep learning task.

Step 4022: Obtain performance data for executing the deep learning task according to each candidate execution policy.

The performance data includes real-time data and accuracy data. The real-time data indicates real-time performance of the deep learning task, and the real-time performance means whether the deep learning task can be completed within a specified time limit. The accuracy data indicates accuracy of the deep learning task, and the accuracy is a probability of accurately implementing the deep learning task. In addition, when accuracy data for executing the deep learning task by using any candidate execution policy is obtained, overall performance of the plurality of deep learning tasks may be considered. For example, a sum of normalized accuracy losses of all deep learning tasks is considered, to achieve overall optimal performance.

Optionally, the performance data for executing the deep learning task according to any candidate execution policy may be measured by executing the deep learning task according to the candidate execution policy. However, if the performance of each candidate execution policy is measured by actual execution, costs for obtaining performance data increase exponentially with a quantity of tasks and a quantity of model variants. Therefore, in this application, the real-time data may be predicted according to the pretrained artificial intelligence model (referred to as a prediction model below), and the accuracy data may be obtained based on the precision of the model variant indicated by the candidate execution policy. The prediction model may be trained by using actually measured historical performance data, and real-time data of each candidate execution policy may be predicted by using the trained prediction model.

The real-time data is predicted. Obtaining the real-time data can be greatly speeded up, to speed up obtaining the execution policy of the deep learning task. In addition, because the prediction model is trained by using actually measured historical performance data, a prediction effect is closer to actual performance than that of real-time data obtained by using a technology such as schedulable analysis at a current stage. This helps find a more effective execution policy, to better ensure user experience.

Step 4023: Select the execution policy of the deep learning task from the plurality of candidate execution policies based on the performance data of the plurality of candidate execution policies.

After the performance data of the plurality of candidate execution policies of the deep learning task is obtained, a candidate execution policy that has optimal performance and that is reflected by the performance data may be determined as the execution policy of the deep learning task. It should be noted that the foregoing description of the implementation process of step 402 is provided by using an example in which the execution policy indicates the execution priority and the used model variant of the deep learning task. When the execution policy further indicates other content (for example, another deep learning task that is executed concurrently with the deep learning task), for an implementation process of step 402, refer to the foregoing description. Details are not described herein again.

A process of step 4021 to step 4023 may be considered as an iterative optimization process. In the iterative optimization process, the deep learning task may be separately executed for different model variants based on different priorities, and then a combination of a model variant and a priority with a best result is determined based on accuracy and real-time performance of executing the deep learning task, to obtain the execution policy of the deep learning task. In the iterative optimization process, when real-time performance and accuracy gains of the deep learning task obtained according to candidate execution policies do not increase, the optimization may be stopped, and a candidate execution policy used when the optimization is stopped is determined as the execution policy of the deep learning task. The execution policy of the deep learning task is determined by using the iterative optimization process, so that accuracy loss ratios of all deep learning tasks can be minimized, and resource contention between the plurality of deep learning tasks can be reduced while an implementation effect of the deep learning tasks is ensured, to meet performance requirements of the user for the deep learning tasks.

In addition, step 402 may be implemented by cooperation of the first computer device and the second computer device. In an implementation, the first computer device 10 is configured to: determine the plurality of deep learning tasks to be concurrently executed and the artificial intelligence model for implementing each deep learning task, obtain the plurality of model variants of each artificial intelligence model, and provide the second computer device 20 with the plurality of model variants of the artificial intelligence model for implementing each deep learning task or information about the plurality of model variants. The second computer device 20 is configured to: determine the plurality of candidate execution policies of each deep learning task based on the performance requirement of each deep learning task and the plurality of model variants of the artificial intelligence model for implementing each deep learning task or information about the plurality of model variants, obtain the performance data of each candidate execution policy, and then select the execution policy of the deep learning task from the plurality of candidate execution policies based on the performance data of the plurality of candidate execution policies.

Alternatively, step 402 may be implemented by cooperation of the first computer device, the second computer device, and the third computer device. In an implementation, for functions of the first computer device and the second computer device, refer to corresponding descriptions in step 402 when the first computer device and the second computer device cooperate for implementation. In addition, in this implementation, the second computer device is further configured to provide the plurality of candidate execution policies for the third computer device. The third computer device is configured to: obtain the performance data of the plurality of candidate execution policies, and provide the performance data of the plurality of candidate execution policies for the second computer device.

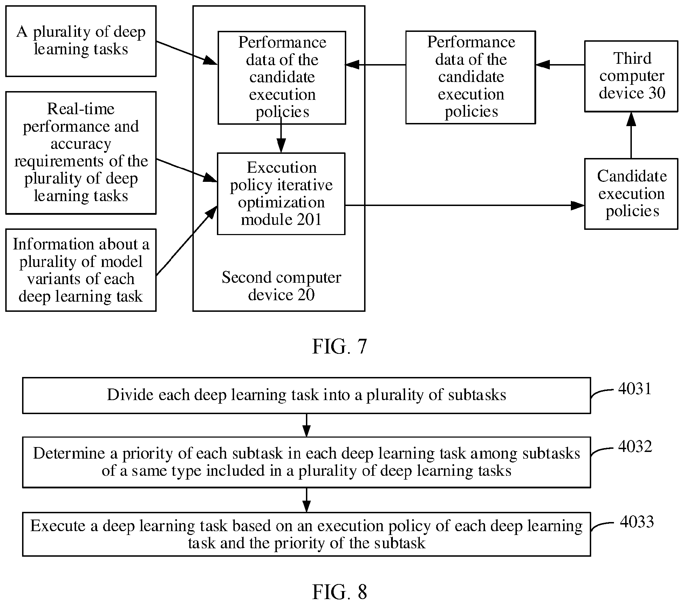

FIG. 6 is a schematic diagram of a principle of implementing step 402 by cooperation of the first computer device, the second computer device, and the third computer device. FIG. 7 is a schematic diagram of a principle of implementing a related function by the second computer device. As shown in FIG. 6, after obtaining the plurality of deep learning tasks and the artificial intelligence model for implementing the deep learning task, the first computer device 10 may generate the plurality of model variants of each artificial intelligence model, and provide the second computer device 20 with the plurality of model variants of the artificial intelligence model for implementing each deep learning task or the information about the plurality of model variants. The second computer device 20 is configured to: determine the plurality of candidate execution policies of each deep learning task based on the performance requirement of each deep learning task and the plurality of model variants of the artificial intelligence model for implementing each deep learning task or the information about the plurality of model variants, and provide the candidate execution policies for the third computer device 30, so that the third computer device 30 feeds back the performance data of the candidate execution policies to the second computer device. Correspondingly, the second computer device 20 may determine the execution policy of the deep learning task from the plurality of candidate execution policies based on the performance data, and provide the execution policy of each deep learning task for the third computer device 30. The third computer device 30 is configured to execute a corresponding deep learning task according to the execution policy of the deep learning task provided by the second computer device 20.

As shown in FIG. 7, the second computer device 20 includes three inputs, including two inputs in an initialization phase and one input in an iterative optimization process. The two inputs in the initialization phase are: i. real-time performance and accuracy requirements of the plurality of deep learning tasks, and this part may be specified by a user; and ii. an output of the first computer, that is, the plurality of model variants of each deep learning task. Optionally, the second computer device 20 may store information such as accuracy of each model variant (as shown in FIG. 7) instead of the model variant. An input of the second computer device 20 in the iterative optimization process is performance data that is of a candidate execution policy and that is provided by the third computer device 30. An output of the second computer device 20 is a candidate execution policy and a finally determined execution policy that meets a performance requirement. As shown in FIG. 7, a process of executing a policy through iterative optimization may be performed by a policy execution iterative optimization module 201 in the second computer device 20.

It should be understood that step 402 implemented by cooperation of the first computer device and the second computer device, and step 402 implemented by cooperation of the first computer device, the second computer device, and the third computer device are merely examples for description. During actual implementation, functions implemented by each computer device may be adjusted according to a requirement. In addition, an application scenario of the task execution method provided in this embodiment of this application may be further in another implementation form. When the application scenario is in another implementation form, a process of implementing step 402 may also be correspondingly adjusted according to a requirement. Examples are not listed in this embodiment of this application.

Step 403: Execute a corresponding deep learning task according to the execution policy of each deep learning task.

After the execution policy of each deep learning task is obtained, the corresponding deep learning task may be executed according to the execution policy of each deep learning task. For example, a model variant indicated by an execution policy of any deep learning task is used to execute the deep learning task in a scheduling mode indicated by the execution policy of the deep learning task.

Optionally, the deep learning task may include a plurality of subtasks. When the corresponding deep learning task is executed according to the execution policy of each deep learning task, the corresponding deep learning task may be further executed for the subtasks included in the deep learning task. In an implementation, as shown in FIG. 8, an implementation process of step 403 includes the following steps.

Step 4031: Divide each deep learning task into a plurality of subtasks.

The deep learning task usually includes a plurality of execution units, and each of the plurality of execution units implements a different function of the deep learning task. For example, the deep learning task may include a pre-processing execution unit, an intermediate processing execution unit, and a post-processing execution unit. In this case, the deep learning task may be divided into a plurality of subtasks based on attributes of the execution units included in the deep learning task. The attributes of the execution units may be distinguished based on one or more of the following: execution bodies of the execution units and task properties of the execution units. For example, the deep learning task may be divided into the plurality of subtasks based on whether an execution body of an execution unit is a CPU or a GPU, or based on whether a task property of an execution unit is neural network inference or non-neural network inference. For example, for a cloud video live broadcast task, the entire task includes not only a neural network model inference part, but also a non-neural network inference part. For example, a task part of gift sending belongs to the neural network model inference part, facial recognition needs to be performed based on a video stream, and a task part of gift special effect superimposing after facial recognition belongs to the non-neural network inference part. When the cloud video live broadcast task is divided based on a task attribute, the cloud video live broadcast task may be divided into a neural network inference part and another non-neural network inference part. The neural network inference part may be accelerated by a neural network acceleration module on a cloud video live broadcast edge server, and the another non-neural network inference part may be processed by a central processing unit on the edge server.

Step 4032: Determine a priority of each subtask in each deep learning task among subtasks of a same type included in the plurality of deep learning tasks.

After the deep learning task is divided into the plurality of subtasks, a priority of each subtask may be determined, the priority of each subtask among subtasks of a same type included in the plurality of deep learning tasks is determined based on a priority of each subtask in the plurality of deep learning tasks, and a plurality of subtasks included in each type of subtask are queued based on the priority of each subtask among subtasks of a same type included in the plurality of deep learning tasks. A priority of a subtask of a deep learning task may be equal to a priority of the deep learning task. In addition, the plurality of subtasks included in each type of subtask may be queued by adding the plurality of subtasks included in each type of subtask to an execution queue of a corresponding type of subtask. For example, both a deep learning task 1 and a deep learning task 2 include a subtask executed by a CPU and a subtask executed by a GPU, and a priority of the deep learning task 1 is higher than a priority of the deep learning task 2. In this case, the subtasks that are of the deep learning task 1 and the deep learning task 2 and that are executed by the CPU may be added to a CPU subtask queue, and in the CPU subtask queue, the subtask that is of the deep learning task 1 and that is executed by the CPU is located before the subtask that is of the deep learning task 2 and that is executed by the CPU. The subtasks that are of the deep learning task 1 and the deep learning task 2 and that are executed by the GPU are added to a GPU subtask queue, and in the GPU subtask queue, the subtask that is of the deep learning task 1 and that is executed by the GPU is located before the subtask that is of the deep learning task 2 and that is executed by the GPU.

Step 4033: Execute the deep learning task based on the execution policy of each deep learning task and the priority of the subtask.

After the execution policy of each deep learning task and the priority of each subtask in each deep learning task among subtasks of a same type included in the plurality of deep learning tasks are determined, the deep learning task may be executed based on the execution policy of each deep learning task and the priority of the subtask. When the deep learning task is separately executed for the plurality of subtasks included in the deep learning task, the deep learning task can be executed based on the priority of the subtask and the execution policy of the deep learning task, so that a scheduling policy of the deep learning task is more refined, and execution performance of the deep learning task is further improved.

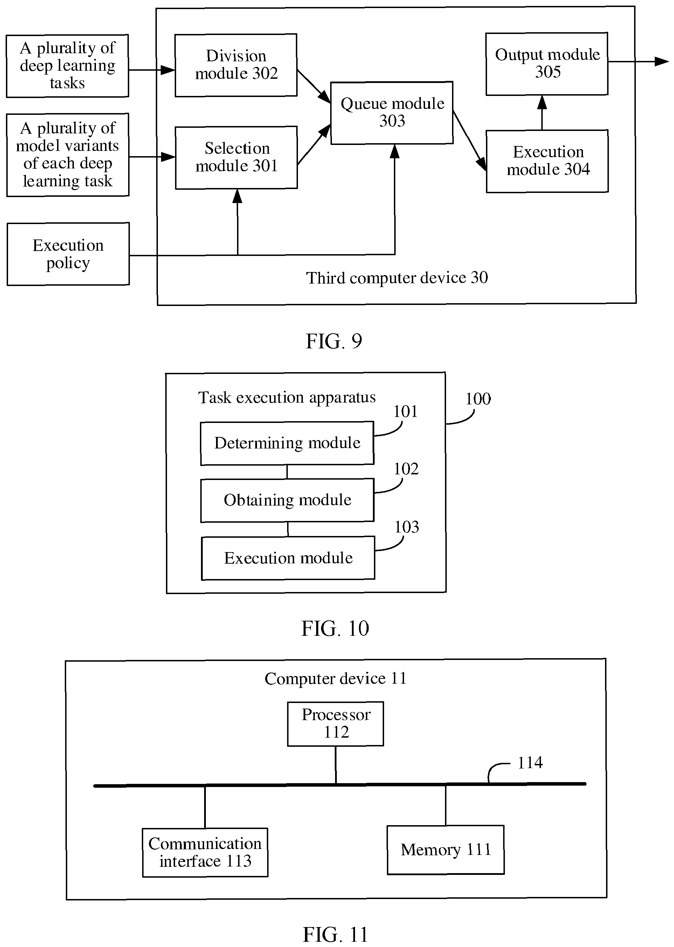

Step 403 may be performed by a third computer device. FIG. 9 is a schematic diagram of a principle of implementing step 403 by the third computer device according to an embodiment of this application. As shown in FIG. 9, the third computer device may obtain a plurality of deep learning tasks, receive a plurality of model variants of each deep learning task provided by the first computer device, and receive an execution policy that is of each deep learning task and that is provided by the second computer device. When executing a deep learning task, the third computer device may select, according to an execution policy of the deep learning task, a model variant indicated by the execution policy from a plurality of model variants of the deep learning task, divide the deep learning task into subtasks, determine priorities of the subtasks among subtasks of a same type included in the plurality of deep learning tasks, then execute a corresponding subtask by using the selected model variant based on a priority of each subtask, and output performance data for executing the deep learning task. When the execution policy further indicates another deep learning task executed concurrently with the deep learning task, the deep learning task and the another deep learning task may be further executed concurrently based on an indication of the execution policy. Optionally, the foregoing functions of the third computer device 30 may be implemented by using a plurality of functional modules. For example, a selection module 301 selects, according to the execution policy, the model variant indicated by the execution policy from the plurality of model variants of the deep learning task, a division module 302 divides the deep learning task into subtasks, a queue module 303 determines priorities of the subtasks among subtasks of a same type included in the plurality of deep learning tasks, an execution module 304 executes (or concurrently executes) the deep learning task based on the priorities, and an output module 305 outputs the performance data for executing the deep learning task.

In conclusion, in the task execution method provided in this embodiment of this application, because the execution policy of the deep learning task indicates the scheduling mode and the used model variant of the deep learning task, the scheduling mode of the deep learning task and the model for implementing the deep learning task are combined, so that execution performance of the deep learning task can be improved in terms of the scheduling mode of the deep learning task, and can also be improved in terms of the model for implementing the deep learning task. This effectively improves execution performance of the deep learning task. In this way, the plurality of deep learning tasks to be concurrently executed can be better executed under a limited resource condition, so that resources can be more effectively used, real-time performance of the deep learning task can be ensured, and accuracy performance of the deep learning task can be ensured, to better ensure user experience.

It should be noted that a sequence of steps of the task execution method provided in this embodiment of this application may be appropriately adjusted, or steps may be correspondingly added or deleted based on a situation. Any variation method readily figured out by a person skilled in the art within the technical scope disclosed in this application shall fall within the protection scope of this application. Therefore, details are not described herein.

An embodiment of this application further provides a task execution apparatus. As shown in FIG. 10, the task execution apparatus 100 includes:
a determining module 101, configured to determine a plurality of deep learning tasks to be concurrently executed and an artificial intelligence model for implementing each deep learning task;
an obtaining module 102, configured to obtain an execution policy of each deep learning task, where the execution policy indicates a scheduling mode and a used model variant of the deep learning task, and the model variant of the deep learning task is obtained according to the artificial intelligence model for implementing the deep learning task; and
an execution module 103, configured to execute a corresponding deep learning task according to the execution policy of each deep learning task.

Optionally, the execution module 103 is specifically configured to execute, by using a model variant indicated by an execution policy of any deep learning task, the deep learning task in a scheduling mode indicated by the execution policy of the deep learning task.

Optionally, the scheduling mode indicates an execution priority of the deep learning task.

Optionally, the scheduling mode further indicates to execute the deep learning task concurrently with another deep learning task.

Optionally, the another deep learning task is determined based on resource occupancy of the deep learning task and the another deep learning task.

Optionally, the execution module 103 is specifically configured to: divide each deep learning task into a plurality of subtasks; determine a priority of each subtask in each deep learning task among subtasks of a same type included in the plurality of deep learning tasks; and execute the deep learning task based on the execution policy of each deep learning task and the priority of the subtask.

Optionally, the obtaining module 102 is specifically configured to: for any deep learning task, obtain a plurality of candidate execution policies of the deep learning task, where at least scheduling modes or model variants indicated by any two candidate execution policies are different; obtain performance data for executing the deep learning task according to each candidate execution policy; and select the execution policy of the deep learning task from the plurality of candidate execution policies based on the performance data of the plurality of candidate execution policies.

Optionally, the performance data includes real-time data, and the real-time data is obtained through prediction according to a pretrained artificial intelligence model.

Optionally, the performance data includes accuracy data, and the accuracy data is obtained based on precision of a model variant indicated by the candidate execution policy.

Optionally, the model variant indicated by the execution policy of the deep learning task is obtained by compressing the artificial intelligence model for implementing the deep learning task.

Optionally, the model variant indicated by the execution policy of the deep learning task is obtained by compressing the artificial intelligence model for implementing the deep learning task and by adjusting a weight parameter of the compressed artificial intelligence model.

In conclusion, in the task execution apparatus provided in this embodiment of this application, because the execution policy of the deep learning task indicates the scheduling mode and the used model variant of the deep learning task, the scheduling mode of the deep learning task and the model for implementing the deep learning task are combined, so that execution performance of the deep learning task can be improved in terms of the scheduling mode of the deep learning task, and can also be improved in terms of the model for implementing the deep learning task. This effectively improves execution performance of the deep learning task. In this way, the plurality of deep learning tasks to be concurrently executed can be better executed under a limited resource condition, so that resources can be more effectively used, real-time performance of the deep learning task can be ensured, and accuracy performance of the deep learning task can be ensured, to better ensure user experience.

It may be clearly understood by a person skilled in the art that, for the purpose of convenient and brief description, for a detailed working process of the foregoing apparatuses and modules, refer to corresponding content in the foregoing method embodiment, and details are not described herein again.

An embodiment of this application provides a computer device. The computer device includes a memory and a processor. The memory stores program instructions, and the processor runs the program instructions to perform the task execution method provided in this application or perform any step of the task execution method provided in this application. For example, the following processes are performed: determining a plurality of deep learning tasks to be concurrently executed and an artificial intelligence model for implementing each deep learning task; obtaining an execution policy of each deep learning task, where the execution policy indicates a scheduling mode and a used model variant of the deep learning task, and the model variant of the deep learning task is obtained according to the artificial intelligence model for implementing the deep learning task; and executing a corresponding deep learning task according to the execution policy of each deep learning task. In addition, for an implementation process in which the computer device executes the program instructions in the memory to perform the steps of the task execution method provided in this application, refer to corresponding descriptions in the foregoing method embodiment.

FIG. 11 is a schematic diagram of a structure of a computer device 11 according to an embodiment of this application. As shown in FIG. 11, the computer device 11 includes a memory 111, a processor 112, a communication interface 113, and a bus 114. The memory 111, the processor 112, and the communication interface 113 are communicatively connected to each other through the bus 114. In addition, the computer device 11 may include a plurality of processors 112, so that functions of the different functional modules are implemented by using different processors.

The memory 111 may be a read only memory (read only memory, ROM), a static storage device, a dynamic storage device, or a random access memory (random access memory, RAM). The memory 111 may store an executable code. When the executable code stored in the memory 111 is executed by the processor 112, the processor 112 and the communication interface 113 are configured to perform the task execution method provided in embodiments of this application. The memory 111 may further include another software module, such as an operating system, or data for running a process.

The processor 112 may be a general-purpose central processing unit (central processing unit, CPU), a microprocessor, an application specific integrated circuit (application specific integrated circuit, ASIC), a graphics processing unit (graphics processing unit, GPU), or one or more integrated circuits.

The processor 112 may alternatively be an integrated circuit chip and has a signal processing capability. In an implementation process, some or all functions of the task execution method in this application may be implemented by using an integrated logic circuit of hardware in the processor 112 or an instruction in a form of software. The foregoing processor 112 may be a general purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 111, and the processor 112 reads information in the memory 111, and completes the task execution method in embodiments of this application in combination with hardware of the processor 112.

The communication interface 113 uses a transceiver module, for example, but not limited to a transceiver, to implement communication between the computer device 11 and another device or a communication network. For example, the communication interface 113 may be any one or any combination of the following components with a network access function: a network interface (for example, an Ethernet interface) or a wireless network adapter.

The bus 114 may include a path for transmitting information between components (for example, the memory 111, the processor 112, and the communication interface 113) of the computer device 11.

It should be noted that when the computer device is a client, the computer device further includes a display, and the display is configured to display a graphical user interface of a program development platform.

A communication path is established between the computer devices 11 through a communication network. Each computer device 11 is configured to implement some functions of the task execution method provided in embodiments of this application. Any computer device 11 may be a computer device (for example, a server) in a cloud data center, a computer device in an edge data center, or the like.

The descriptions of the procedures corresponding to the accompanying drawings have respective focuses. For a part that is not described in detail in a procedure, refer to related descriptions of another procedure.

All or some of the foregoing embodiments may be implemented by using software, hardware, firmware, or any combination thereof. When software is used to implement the embodiments, all or a part of the embodiments may be implemented in a form of a computer program product. A computer program product that provides a program development platform includes one or more computer instructions. When the computer program instructions are loaded and executed on a computer device, all or some of the procedures or functions of the task execution method provided in embodiments of this application are implemented.

The computer device may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide a program development platform.

An embodiment of this application further provides a computer-readable storage medium. The computer-readable storage medium is a non-volatile computer-readable storage medium. The computer-readable storage medium includes program instructions. When the program instructions run on a computer device, the computer device is enabled to perform the task execution method provided in embodiments of this application.

An embodiment of this application further provides a computer program product including instructions. When the computer program product runs on a computer, the computer is enabled to perform the task execution method provided in embodiments of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "at least one" means one or more, and the term "a plurality of' means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A task execution method, wherein the method comprises:
determining a plurality of deep learning tasks to be concurrently executed and an artificial intelligence model for implementing each deep learning task;
obtaining an execution policy of each deep learning task, wherein the execution policy indicates a scheduling mode and a used model variant of the deep learning task, and the model variant of the deep learning task is obtained according to the artificial intelligence model for implementing the deep learning task; and
executing a corresponding deep learning task according to the execution policy of each deep learning task.

2. The method according to claim 1, wherein the executing a corresponding deep learning task according to the execution policy of each deep learning task comprises:
executing, by using a model variant indicated by an execution policy of any deep learning task, the deep learning task in a scheduling mode indicated by the execution policy of the deep learning task.

3. The method according to claim 1 or 2, wherein the scheduling mode indicates an execution priority of the deep learning task.

4. The method according to claim 3, wherein the scheduling mode further indicates to execute the deep learning task concurrently with another deep learning task.

5. The method according to claim 4, wherein the another deep learning task is determined based on resource occupancy of the deep learning task and the another deep learning task.

6. The method according to any one of claims 1 to 5, wherein the executing a corresponding deep learning task according to the execution policy of each deep learning task comprises:
dividing each deep learning task into a plurality of subtasks;
determining a priority of each subtask in each deep learning task among subtasks of a same type comprised in the plurality of deep learning tasks; and
executing the deep learning task based on the execution policy of each deep learning task and the priority of the subtask.

7. The method according to any one of claims 1 to 6, wherein the obtaining an execution policy of each deep learning task comprises:
for any deep learning task, obtaining a plurality of candidate execution policies of the deep learning task, wherein at least scheduling modes or model variants indicated by any two candidate execution policies are different;
obtaining performance data for executing the deep learning task according to each candidate execution policy; and
selecting the execution policy of the deep learning task from the plurality of candidate execution policies based on the performance data of the plurality of candidate execution policies.

8. The method according to claim 7, wherein the performance data comprises real-time data, and the real-time data is obtained through prediction according to a pretrained artificial intelligence model.

9. The method according to claim 7, wherein the performance data comprises accuracy data, and the accuracy data is obtained based on precision of a model variant indicated by the candidate execution policy.

10. The method according to any one of claims 1 to 9, wherein the model variant indicated by the execution policy of the deep learning task is obtained by compressing the artificial intelligence model for implementing the deep learning task.

11. The method according to claim 10, wherein the model variant indicated by the execution policy of the deep learning task is obtained by compressing the artificial intelligence model for implementing the deep learning task and by adjusting a weight parameter of the compressed artificial intelligence model.

12. A task execution apparatus, wherein the apparatus comprises:
a determining module, configured to determine a plurality of deep learning tasks to be concurrently executed and an artificial intelligence model for implementing each deep learning task;
an obtaining module, configured to obtain an execution policy of each deep learning task, wherein the execution policy indicates a scheduling mode and a used model variant of the deep learning task, and the model variant of the deep learning task is obtained according to the artificial intelligence model for implementing the deep learning task; and
an execution module, configured to execute a corresponding deep learning task according to the execution policy of each deep learning task.

13. The apparatus according to claim 12, wherein the execution module is specifically configured to:
execute, by using a model variant indicated by an execution policy of any deep learning task, the deep learning task in a scheduling mode indicated by the execution policy of the deep learning task.

14. The apparatus according to claim 12 or 13, wherein the scheduling mode indicates an execution priority of the deep learning task.

15. The apparatus according to claim 14, wherein the scheduling mode further indicates to execute the deep learning task concurrently with another deep learning task.

16. The apparatus according to claim 15, wherein the another deep learning task is determined based on resource occupancy of the deep learning task and the another deep learning task.

17. The apparatus according to any one of claims 12 to 16, wherein the execution module is specifically configured to:
divide each deep learning task into a plurality of subtasks;
determine a priority of each subtask in each deep learning task among subtasks of a same type comprised in the plurality of deep learning tasks; and
execute the deep learning task based on the execution policy of each deep learning task and the priority of the subtask.

18. The apparatus according to any one of claims 12 to 17, wherein the obtaining module is specifically configured to:
for any deep learning task, obtain a plurality of candidate execution policies of the deep learning task, wherein at least scheduling modes or model variants indicated by any two candidate execution policies are different;
obtain performance data for executing the deep learning task according to each candidate execution policy; and
select the execution policy of the deep learning task from the plurality of candidate execution policies based on the performance data of the plurality of candidate execution policies.

19. The apparatus according to claim 18, wherein the performance data comprises real-time data, and the real-time data is obtained through prediction according to a pretrained artificial intelligence model.

20. The apparatus according to claim 18, wherein the performance data comprises accuracy data, and the accuracy data is obtained based on precision of a model variant indicated by the candidate execution policy.

21. The apparatus according to any one of claims 12 to 20, wherein the model variant indicated by the execution policy of the deep learning task is obtained by compressing the artificial intelligence model for implementing the deep learning task.

22. The apparatus according to claim 21, wherein the model variant indicated by the execution policy of the deep learning task is obtained by compressing the artificial intelligence model for implementing the deep learning task and by adjusting a weight parameter of the compressed artificial intelligence model.

23. A computer device, comprising a memory and a processor, wherein the memory stores program instructions, and the processor runs the program instructions to perform the method according to any one of claims 1 to 11.

24. A computer-readable storage medium, comprising program instructions, wherein when the program instructions are run on a computer device, the computer device is enabled to perform the method according to any one of claims 1 to 11.

25. A computer program product, wherein when the computer program product runs on a computer, the computer is enabled to perform the method according to any one of claims 1 to 11.
